(19) **Europäisches Patentamt**
**European Patent Office**
**Office européen des brevets**

(11) **EP 4 603 795 A1**

(12) **EUROPEAN PATENT APPLICATION**

(43) Date of publication:
**20.08.2025 Bulletin 2025/34**

(21) Application number: **25157677.3**

(22) Date of filing: **13.02.2025**

(51) International Patent Classification (IPC):
**G01B 11/25** (2006.01)    **G01N 21/88** (2006.01)
**G01N 21/95** (2006.01)    **H01M 10/00** (2006.01)

(52) Cooperative Patent Classification (CPC):
**G01N 21/8806; G01N 21/95; H01M 10/00;**
G01B 11/0625

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2024 KR 20240020556**

(71) Applicant: **SAMSUNG SDI CO., LTD.**
**Yongin-si, Gyeonggi-do 17084 (KR)**

(72) Inventors:
• **CHO, Woo Young**
**16678 Suwon-si, Gyeonggi-do (KR)**
• **HAN, Do Yuop**
**16678 Suwon-si, Gyeonggi-do (KR)**
• **HAM, Won Jun**
**16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **APPARATUS AND METHOD FOR INSPECTING ELECTRODE ASSEMBLY**

(57)    Disclosed is an apparatus for inspecting an electrode assembly, which can perform inspection of an electrode assembly in a short period of time without destruction of the electrode assembly. The inspection apparatus can inspect an electrode assembly including an anode, a cathode and a separator interposed between the anode and the cathode, and may include: a laser irradiation unit irradiating the electrode assembly with a laser beam; an illumination unit irradiating the electrode assembly with light; an image acquisition unit obtaining an image of the electrode assembly irradiated with the laser beam or light; and a processor inspecting the electrode assembly based on the obtained image.

FIG. 1

EP 4 603 795 A1

## Description

### FIELD

The present embodiments relate to an apparatus and method for inspecting an electrode assembly to check quality of the electrode assembly.

### BACKGROUND

Secondary batteries can be charged and discharged unlike primary batteries that cannot be charged. Low-capacity secondary batteries are used in small, portable electronic devices, such as smartphones, feature phones, notebook computers, digital cameras, and camcorders, and high-capacity secondary batteries are widely used as power sources for motors in hybrid and electric vehicles and as power storage cells. Such a secondary battery can include an electrode assembly including a cathode and an anode, a case receiving the electrode assembly, and electrode terminals connected to the electrode assembly.

With recent advances in science and technology, secondary batteries are applied to a variety of devices. As a result, interest in safety of the secondary batteries has further increased.

This section is intended only to provide a better understanding of the background of the technology and thus may include information which is not necessarily prior art.

### SUMMARY

It is at least one aspect of the present technology to provide an inspection apparatus and/or an inspection method capable of inspecting a secondary battery and/or an electrode assembly in the secondary battery through visual inspection.

It is at least another aspect of the present technology to provide an inspection apparatus and/or an inspection method capable of performing various inspections simultaneously for inspecting quality of a secondary battery and/or an electrode assembly in the secondary battery.

The above and other aspects and features of the present technology will become apparent from the following description of embodiments of the present technology.

In accordance with some aspects of the present technology, an apparatus for inspecting an electrode assembly including an anode, a cathode, and a separator interposed between the anode and the cathode includes: a laser irradiation unit configured to irradiate the electrode assembly with a beam; an illumination unit configured to irradiate the electrode assembly with light; an image acquisition unit configured to obtain an image of the electrode assembly irradiated with the beam and/or light; and a processor configured to inspect the electrode assembly based on the obtained image.

In accordance with other aspects of the present technology, a method for inspecting an electrode assembly includes: performing inspection of the electrode assembly with regard to at least one of miswinding, alignment, major diameter, volume, and folded state of the electrode assembly through the inspection apparatus.

According to some embodiments, it is possible to provide an inspection apparatus and/or an inspection method capable of performing inspection of a secondary battery without destruction of the secondary battery.

According to some embodiments, it is possible to provide an inspection apparatus and/or an inspection method capable of performing a fully automated inspection of a secondary battery.

According to some embodiments, it is possible to perform multiple inspections on secondary batteries within a short period of time.

However, aspects and features of the technology described herein are not limited to those described above and other aspects and features not mentioned will be clearly understood by those skilled in the art from the detailed description given below.

### BRIEF DESCRIPTION OF THE DRAWINGS

The following drawings accompanying this specification illustrate embodiments of the present technology, and further describe aspects and features of the present technology together with the detailed description. Thus, the present technology should not be construed as being limited to the drawings:

FIG. 1 is a perspective view of a cylindrical battery according to some embodiments;
FIG. 2 is a cross-sectional view of the cylindrical battery according to some embodiments;
FIG. 3 is a schematic diagram of an apparatus for inspecting an electrode assembly according to some embodiments;
FIG. 4 is a flowchart illustrating a method for inspecting an electrode assembly according to some embodiments;
FIG. 5 is a flowchart illustrating miswinding inspection according to some embodiments;
FIG. 6A to FIG. 6B are diagrams illustrating the miswinding inspection according to some embodiments;
FIG. 7 is a flowchart illustrating miswinding inspection according to some embodiments;
FIG. 8 is a diagram illustrating the miswinding inspection according to some embodiments;
FIG. 9 is a flowchart illustrating alignment inspection according to some embodiments;
FIG. 10 is a diagram illustrating the alignment inspection according to some embodiments;
FIG. 11 is a flowchart illustrating alignment inspection according to some embodiments;

FIG. 12 is a diagram illustrating the alignment inspection according to some embodiments; and

FIG. 13 is a flowchart illustrating major diameter inspection according to some embodiments.

## DETAILED DESCRIPTION

Hereinafter, exemplary embodiments of the present technology will be described, in detail, with reference to the accompanying drawings. The terms or words used in this specification and claims should not be construed as being limited to the usual or dictionary meaning and should be interpreted as having meanings and concepts consistent with the technical idea of the present technology based on the principle that the inventor(s) can be his/her own lexicographer to appropriately define the concept of the term to explain the technology in the most suitable way. The embodiments described in this specification and the configurations shown in the drawings are only some of the embodiments of the present technology and do not represent all of the technical ideas, aspects, and features of the present technology. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof. Further, the use of "may" when describing embodiments of the present technology relates to "one or more embodiments of the present technology."

In the figures, dimensions of the various elements, layers, and the like may be exaggerated for clarity of illustration. The same reference numerals designate the same elements.

References to two compared elements, features, and the like as being "the same," may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless specified otherwise, each element may be singular or plural.

When an arbitrary element is referred to as being disposed (or located or disposed) "above" (or "below") or "on" (or "under") a component, it may mean that the arbitrary element is placed in contact with the upper (or lower) surface of the component and may also mean that another component may be interposed between the component and any arbitrary element disposed (or located or disposed) on (or under) the component.

In addition, it will be understood that, when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless specified otherwise. That is, "and/or" includes any or all combinations of a plurality of items enumerated. When "C to D" is stated, it means C or more and D or less, unless specified otherwise.

The terminology used herein is for the purpose of describing embodiments of the present technology and is not intended to be limiting of the present technology.

In general, to check whether secondary batteries have been safely manufactured, quality inspection is performed on multiple secondary batteries. Quality inspection of the secondary batteries may include miswinding inspection, alignment inspection, major diameter inspection, volume inspection, and/or one-end folded state inspection.

Since there is no instrument capable of automatically inspecting secondary batteries, the secondary batteries are manually inspected by an operator. For example, inspection is carried out through destruction of the secondary battery. However, the inventors have recognized such inspection results in extensive waste of batteries, high time consumption, and inconvenience.

On the other hand, X-ray or CT instruments have been used to check the quality of secondary batteries to prevent destruction of the secondary batteries. However, these instruments have problems of high time consumption and low reliability. Moreover, this method has difficulty in securing a safe working environment due to use of radiation and/or requires excessive costs for inspection.

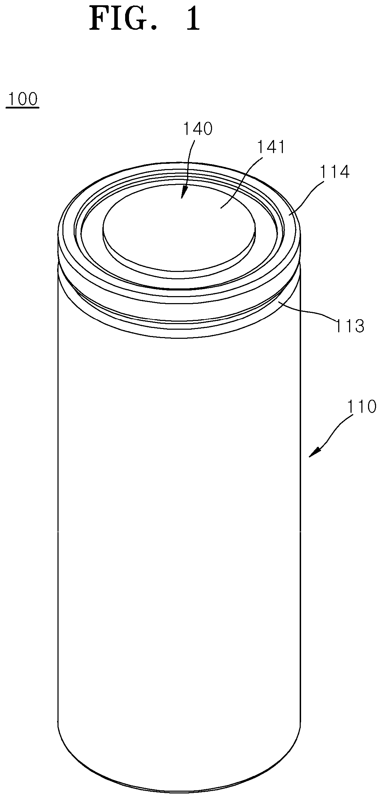

FIG. 1 is a perspective view of a cylindrical battery according to some embodiments.

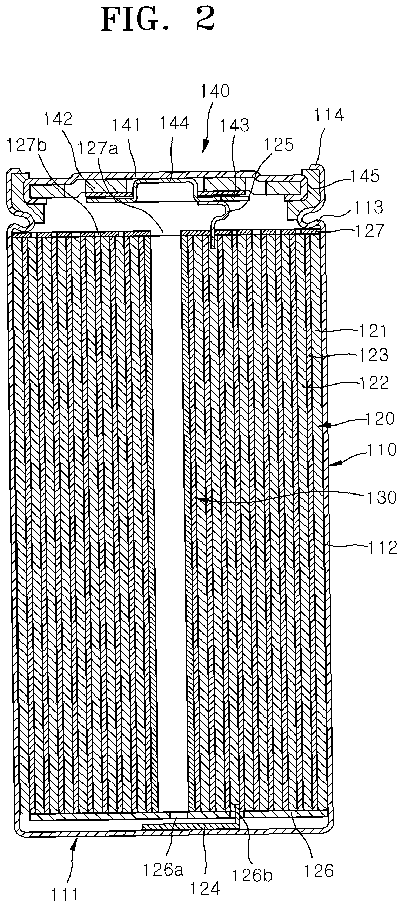

FIG. 2 is a cross-sectional view of the cylindrical battery according to some embodiments.

Referring to FIG. 1 and FIG. 2, a cylindrical lithium ion secondary battery 100 according to various embodiments may include a cylindrical can 110, an electrode assembly 120, and a cap assembly 140. The cylindrical lithium ion secondary battery 100 may further include a center pin 130. Furthermore, in the secondary battery 100 according to some embodiments, the cap assembly 140 also performs current interruption and is thus often referred to as a current interrupt device.

The cylindrical can 110 may include a substantially circular bottom 111 and a cylindrical sidewall 112 extending a certain length upwards from a circumference of the bottom 111. During a manufacturing process of the secondary battery, an upper portion of the cylindrical can 110 is open. Thus, during an assembly process of the secondary battery, the electrode assembly 120 and the center pin 130 may be inserted into the cylindrical can 110 together with the electrolyte. The cylindrical can 110 may be formed of, for example, steel, stainless steel, aluminum, aluminum alloys, or an equivalent thereto, without being limited thereto.

In addition, the cylindrical can 110 may include a beading portion 113 recessed inwards at a lower portion thereof and a crimping portion 114 bent inwards at an upper portion thereof with respect to the cap assembly 140 to prevent the cap assembly 140 from being detached outwards.

The electrode assembly 120 may be received within the cylindrical can 110. The electrode assembly 120 may include an anode plate 121 having an anode active material (for example, graphite, carbon, and the like) coated on an anode collector, a cathode plate 122 having a cathode active material (for example, transition metal oxide ($LiCoO_2$, $LiNiO_2$, $LiMn_2O_4$, and the like)) coated on a cathode collector, and a separator 123 interposed between the anode plate 121 and the cathode plate 122 to prevent short circuit while allowing only migration of lithium ions. Further, the anode plate 121, the cathode plate 122, and the separator 123 may be wound in a substantially cylindrical shape. By way of example, the anode collector may be formed of copper (Cu) foil, the cathode collector may be formed of aluminum (Al) foil, and the separator may be formed of polyethylene (PE) or polypropylene (PP) without being limited thereto.

In addition, an anode tab 124 may be welded to the anode plate 121 to protrude a certain length downwards and a cathode tab 125 may be welded to the cathode plate 122 to protrude a certain length upwards, or vice versa. By way of example, the anode tab 124 may be formed of copper (Cu) or nickel (Ni) and the cathode tab 125 may be formed of aluminum (Al), without being limited thereto.

In addition, the anode tab 124 of the electrode assembly 120 may be welded to the bottom 111 of the cylindrical can 110. Accordingly, the cylindrical can 110 may act as an anode. It should be understood that the cathode tab 125 may be welded to the bottom 111 of the cylindrical can 110 to act as a cathode.

In addition, a first insulating plate 126 coupled to the cylindrical can 110 and formed with a first hole 126a at a center thereof and a second hole 126b at a periphery thereof may be interposed between the electrode assembly 120 and the bottom 111. The first insulating plate 126 may serve to prevent the electrode assembly 120 from electrically contacting the bottom 111 of the cylindrical can 110. In particular, the first insulating plate 126 may serve to prevent the cathode plate 122 of the electrode assembly 120 from electrically contacting the bottom 111. Here, the first hole 126a serves to allow a gas to rapidly flow upwards through the center pin 130 in the event of generation of a large amount of gas due to an abnormality in the secondary battery, and the second hole 126b serves to allow the anode tab 124 to be welded to the bottom 111 therethrough.

In addition, a second insulating plate 127 coupled to the cylindrical can 110 and formed with a first hole 127a at a center thereof and a plurality of second holes 127b on a periphery thereof may be interposed between the electrode assembly 120 and the cap assembly 140. The second insulating plate 127 may serve to prevent the electrode assembly 120 from electrically contacting the cap assembly 140. In particular, the second insulating plate 127 may serve to prevent the anode plate 121 of the electrode assembly 120 from electrically contacting the cap assembly 140. Here, the first hole 127a can serve to allow a gas to rapidly flow into the cap assembly 140 in the event of generation of a large amount of gas due to an abnormality in the secondary battery, and one of the second holes 127b can serve to allow the cathode tab 125 to be welded to the cap assembly 140 therethrough. In addition, the remaining second holes 127b can serve to allow an electrolyte to rapidly flow into the electrode assembly 120 during an electrolyte injection process.

Furthermore, the first holes 126a, 127a of the first and second insulating plates 126, 127 may have smaller diameters than the center pin 130 to prevent the center pin 130 from electrically contacting the bottom 111 of the cylindrical can 110 or the cap assembly 140 due to external impact.

The center pin 130 may be prepared in the form of a hollow circular pipe, which may be coupled substantially to the center of the electrode assembly 120. Such a center pin 130 may be formed of, for example, steel, stainless steel, aluminum, aluminum alloys, or polybutylene terephthalate, without being limited thereto. The center pin 130 can serve to suppress deformation of the electrode assembly 120 during charging and discharging of the battery and can act as a flow conduit for gases generated within the secondary battery. Of course, in some embodiments, the center pin 130 may be omitted.

The cap assembly 140 may include a top plate 141, a middle plate 142, an insulating plate 143, and a bottom plate 144.

The middle plate 142 may be disposed under the top plate 141 and may have a substantially flat shape.

The insulating plate 143 may be formed in a circular ring shape having a constant width in bottom view. In addition, the insulating plate 143 can serve to insulate the middle plate 142 and the bottom plate 144 from each other. The insulating plate 143 may be, for example, interposed between the middle plate 142 and the bottom plate 144 and may be ultrasonically welded thereto, without being limited thereto.

The cap assembly 140 may be fixed to the inside of the can 110 by a gasket 145 to seal the case. The gasket 145 may electrically insulate between the can 110 and the cap assembly. The gasket 145 may prevent moisture or electrolyte from flowing in or out between the can and cap assembly.

However, it should be understood that the present technology is not limited thereto and the case may have various shapes, such as a circular shape, a pouch shape, and the like, and may be formed of metal, such as aluminum, aluminum alloys, and nickel-plated steel, a laminate film constituting a pouch, or plastics, without being limited thereto.

The lithium secondary battery 100, according to some embodiments, has been described with reference to FIG. 1 and FIG. 2. On the other hand, as described herein, safety concerns regarding the secondary battery 100 have been increasing in recent years. Accordingly, when manufacture of the secondary battery 100 is completed, the secondary battery 100 is subjected to quality inspection before application of the secondary battery 100 to products. Here, the quality inspection of the secondary battery 100 can be a process of checking the external appearance of the secondary battery 100 to ensure that the secondary battery 100 has been properly manufactured in accordance with design. The quality inspection of the secondary battery 100 can be performed, for a non-limiting example, through visual inspection of the electrode assembly 120 in the secondary battery.

Next, a method and/or apparatus for inspecting an electrode assembly in a secondary battery 100 will be described.

On the other hand, an object to be inspected by an apparatus for inspecting an electrode assembly according to some embodiments is not limited to the electrode assembly. The inspection apparatus may perform inspection not only of the electrode assembly, but also of the secondary battery in which the electrode assembly is embedded, a cell module including the secondary battery, a cell pack, and the like. Furthermore, the inspection apparatus may perform inspection of any object formed by stacking a plurality of layers, such as an electrode assembly. For simplicity of description, an electrode assembly will be described as a non-limiting example of an object to be inspected herein.

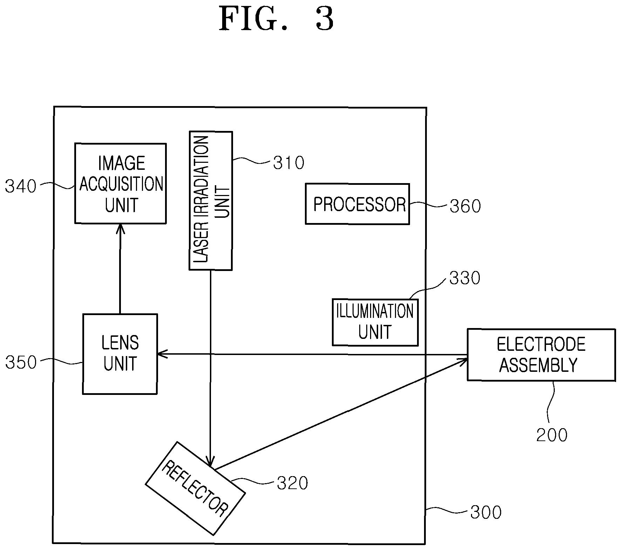

FIG. 3 is a schematic view of an apparatus for inspecting an electrode assembly according to some embodiments.

In FIG. 3, electrode assembly 200 denotes an electrode assembly including, for example, the electrode assembly 120 illustrated in FIG. 1 and FIG. 2. As described in relation to FIG. 1 and FIG. 2, the electrode assembly 200 may include an anode, a cathode, and a separator interposed between the anode and the cathode. The electrode assembly 200 may include a laminate structure formed by stacking the anode, the cathode, and the separator. The electrode assembly 200 includes, for example, a jellyroll type electrode assembly, which is formed by winding such a laminate structure in one direction. The electrode assembly 200 to be inspected by the inspection apparatus according to some embodiments is not limited to the jellyroll type, and may include, for example, a pouch type, a prismatic type, a coil type, and the like. However, for simplicity of description, a jelly-roll type electrode assembly 200 will hereinafter be described as an object of inspection by way of example.

In FIG. 3, inspection apparatus 300 denotes an apparatus for inspecting the electrode assembly 200. The inspection apparatus 300 checks quality of the electrode assembly 200. Specifically, the inspection apparatus 300 checks the quality of the electrode assembly 200 by checking the shape of the electrode assembly 200, that is, an external appearance thereof. For example, the inspection apparatus 300 inspects the electrode assembly 200 with regard to at least one of miswinding, alignment, major diameter, volume, and folded states thereof.

To this end, the inspection apparatus 300 shown in FIG. 3 includes a laser irradiation unit 310, an illumination unit 330, an image acquisition unit 340, and a processor 360. The inspection apparatus 300 may further include a reflector 320 and a lens unit 350. However, components of the inspection apparatus 300 are not limited to the components shown in FIG. 3. The inspection apparatus 300 may include fewer components than shown in FIG. 3 and/or may include more components in addition to the components shown in FIG. 3. For example, the inspection apparatus 300 may further include a memory (not shown) storing instructions and/or data required for operation of the inspection apparatus 300 (e.g., a non-transitory computer readable medium), and a communication unit (not shown) that enables the inspection apparatus 300 to communicate with external devices and/or external servers. The processor may be configured to execute instructions stored in the memory.

The laser irradiation unit 310 may emit a laser beam towards the electrode assembly 200. To this end, the laser irradiation unit 310 may be spaced apart from the electrode assembly 200 such that the electrode assembly 200 can be irradiated with the laser beam.

The laser irradiation unit 310 emits a laser beam toward the electrode assembly 200. The laser irradiation unit 310 includes at least one of a gas laser, a solid-state laser, and an excimer laser. The gas laser includes, for example, a He-Ne laser, an Ar laser, and/or a $CO_2$ laser. The solid-state laser includes, for example, any laser that is optically pumped by a flash lamp and/or an arc lamp. The excimer laser includes any laser that emits light in the ultraviolet band at high power. However, it should be understood that the present technology is not limited thereto and the laser irradiation unit 310 can include any device capable of emitting a laser beam amplified through inductive emission.

Alternatively, the laser irradiation unit 310 may emit a laser beam towards the electrode assembly 200 through the reflector 320. In some embodiments, as shown in FIG. 3, the reflector 320 may be realized by one or multiple reflectors that reflect the emitted laser beam received from the laser irradiation unit 310 towards the electrode assembly 200. Specifically, the laser irradiation unit 310 emits a laser beam towards the reflector 320. The reflector 320 reflects the laser beam towards the electrode assembly 200. The reflector 320 may be spaced apart from the laser irradiation unit 310 to receive the laser beam emitted from the laser irradiation unit 310. However, the reflector 320 may also be disposed within the laser irradiation unit 310 to directly contact the laser beam emitted from the laser irradiation unit 310. Further, the reflector 320 (as shown) is spaced apart from the electrode assembly 200 such that the received laser beam can be reflected back to the electrode assembly 200. With this structure, the reflector 320 (e.g., mirror) can ensure that the laser beam can be accurately delivered to the electrode assembly 200.

The laser beam delivered to the electrode assembly 200 may be reflected from the electrode assembly 200 to be acquired by the image acquisition unit 340. As a result, the inspection apparatus 300 according to some embodiments can inspect the electrode assembly 200 based on a laser phase difference.

The illumination unit 330 may emit light towards the electrode assembly 200. The illumination unit 330 may be spaced apart from the electrode assembly 200 to emit light. For example, the illumination unit 330 is disposed such that light emitted from the illumination unit 330 is directed towards an upper surface of the electrode assembly 200. The illumination unit may irradiate the electrode assembly with light. The illumination units 330 may be provided in plural, for example, to emit light towards upper, lower, left and/or right sides of the upper surface of the electrode assembly 200. Alternatively, the illumination unit(s) 330 may be one light source that surrounds the upper, lower, left and/or right sides of the upper surface of the electrode assembly 200. Alternatively, the illumination unit 330 may be implemented by the laser irradiation unit 310 or the laser irradiation unit 310 may be implemented by the illumination unit 330. In this case, one of the laser irradiation unit 310 and the illumination unit 330 may be omitted.

Light delivered to the electrode assembly 330 may be reflected from the electrode assembly 200 to be acquired by the image acquisition unit 340.

The image acquisition unit 340 can obtain an image of the electrode assembly 200 irradiated with the laser beam or light. For example, the image acquisition unit 340 may acquire an image of the electrode assembly 200 irradiated with the laser beam and/or light that is refracted by the lens unit 350. To this end, the lens unit 350 may be spaced apart from the image acquisition unit 340 and/or the electrode assembly 200. For a non-limiting example, the lens unit 350 may be disposed such that the laser beam and/or light reflected from the electrode assembly 200 is bent at 90 degrees to reach the image acquisition unit 340. The lens unit may allow for the image acquisition unit to obtain the image of the electrode assembly.

The image acquisition unit 340, in some embodiments, includes a sensor capable of obtaining an image, for example, a vision sensor (including, for example, a vision camera), a LiDAR sensor, and/or a laser sensor.

An image obtained by the image acquisition unit 340 can include any images that represent information regarding the electrode assembly 200, such as photographic images, images representing distances or properties, and the like.

The image obtained by the image acquisition unit 340 includes, for example, an image of an upper surface of the electrode assembly 200. Here, the image of the upper surface of the electrode assembly 200 includes an image of a laser beam incident on the upper surface of the electrode assembly 200. Alternatively, the image of the upper surface of the electrode assembly 200 may include a photographic image of the upper surface of the electrode assembly 200.

The upper surface of the electrode assembly 200 is a cross-section in a direction in which a stacked shape of the anode, the cathode, and the separator in the electrode assembly 200 can be viewed. For example, the upper surface of the electrode assembly 200 is a cross-section perpendicular to a winding core axis of the jellyroll and can be observed when a winding core of the jellyroll is observed in a winding axis direction of the jellyroll.

The processor 360 may control all or some components of the inspection apparatus 300. The processor 360 may be embedded in the inspection apparatus 300. Alternatively, the processor 360 may be placed outside the inspection apparatus 300 and may control each of the components in the inspection apparatus 300 through wired or wireless communication.

The processor 360 includes at least one of, for example, a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), and a field programmable gate array (FPGA).

The processor 360 may inspect the electrode assembly 200 based on the obtained image.

As such, the inspection apparatus 300 according to some embodiments can acquire an image of the electrode assembly 200 and check the quality of the electrode assembly 200 without destruction of the electrode assembly 200. In addition, the inspection apparatus 300 can perform two or more inspections on the electrode assembly 200 at the same time. Further, the inspection apparatus 300 allows the inspections on the electrode assembly 200 to be automatically performed. Accordingly, the inspection apparatus 300 improves an operator load factor while minimizing the number of electrode assemblies 200 that will be destroyed by inspection and then discarded.

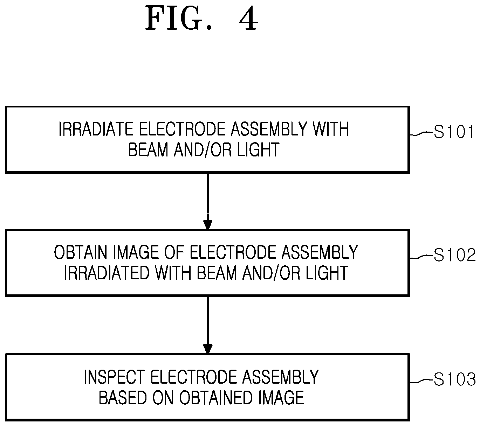

FIG. 4 is a flowchart illustrating a method for inspecting an electrode assembly according to some embodiments. FIG. 4 illustrates a method for inspecting the electrode assembly 200 through the inspection apparatus 300 shown in FIG. 3, as a non-limiting example.

The method for inspecting an electrode assembly according to some embodiments includes a step of irradiating the electrode assembly 200 with a laser beam and/or light (step S101). As illustrated in FIG. 3, the laser irradiation unit 310 may emit a laser beam towards the electrode assembly 200 and the illumination unit 330 may emit light towards the electrode assembly 200. Here, the laser irradiation unit 310 may emit the laser beam while the illumination unit 330 emits light, may emit the laser beam before the illumination unit 330 emits light, or may emit the laser beam after the illumination unit 330 emits light.

The method for inspecting an electrode assembly according to some embodiments includes a step of obtaining an image of the electrode assembly 200 irradiated with the laser beam and/or light (step S102). Referring to FIG. 3, the image acquisition unit 340 may obtain an image of the electrode assembly 200.

The method for inspecting an electrode assembly according to some embodiments includes a step of inspecting the electrode assembly 200 based on the obtained image (step S103). As illustrated in FIG. 3, the processor 360 may check the quality of the electrode assembly 200 based on the obtained image. For example, based on the obtained image, the processor 360 inspects the electrode assembly 200 with regard to at least one of miswinding, alignment, major diameter, volume, and one-end folded state of the electrode assembly 200.

The following description will focus on one or more inspections performed by the inspection apparatus 300.

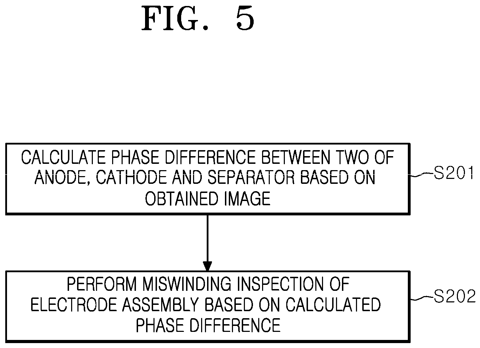

FIG. 5 is a flowchart illustrating miswinding inspection according to some embodiments.

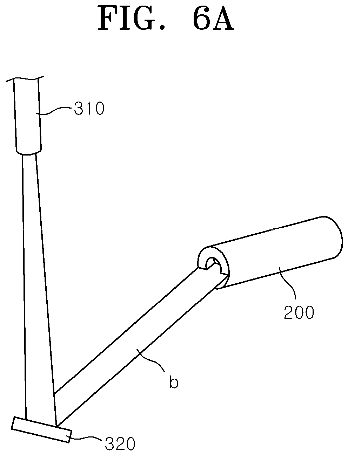

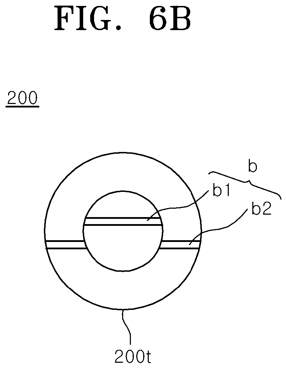

FIG. 6A and FIG. 6B are diagrams illustrating the miswinding inspection according to some embodiments.

FIG. 5, FIG. 6A and FIG. 6B illustrate miswinding inspection of the electrode assembly 200 as one example of checking the quality of the electrode assembly 200 illustrated in FIG. 3 and FIG. 4.

Referring to FIG. 5, the inspection apparatus 300 according to some embodiments calculates a phase difference between two of the anode, the cathode, and the separator based on the obtained image (step S201).

For example, as shown in FIG. 6A, a laser beam b emitted from the laser irradiation unit 310 is directed toward the electrode assembly 200. Here, as illustrated in FIG. 3 and FIG. 4, the laser beam b may be reflected towards the electrode assembly 200 by the reflector 320.

FIG. 6B shows an image of an upper surface 200t of the electrode assembly. The image acquisition unit 340 may obtain an image caused by the laser beam b on the upper surface 200t of the electrode assembly.

Based on the obtained image, the processor 360 calculates a phase difference between at least two of the anode, the cathode, and the separator. The phase difference may be generated by, for example, a thickness of at least one of the anode, the cathode, and the separator.

Specifically, the processor 360 determines zones where the laser beam b has different phases. For example, the processor 360 determines that a laser beam image b1 created in a first zone and a laser beam image b2 created in a second zone have different phases. For example, the processor 360 determines, based on the phases of the laser beam image b 1 created in the first zone and the laser beam image b2 created in the second zone, that the first zone is placed 5 mm further inwards than the second zone. As such, the processor 360 calculates a phase difference between materials based on images of the laser beam b formed on the electrode assembly 200.

Referring to FIG. 5, the inspection apparatus 300 according to some embodiments performs miswinding inspection of the electrode assembly 200 based on the calculated phase difference (step S202).

Here, the miswinding inspection is performed to check a wound state between the materials of the electrode assembly 200. The materials of the electrode assembly 200 include at least one of the anode, the cathode, and the separator. Specifically, the miswinding inspection may include measuring a height difference between the materials.

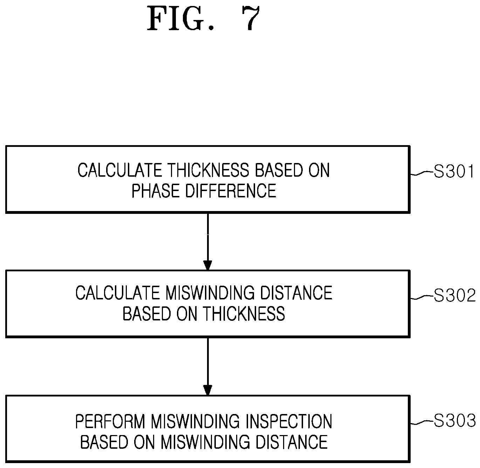

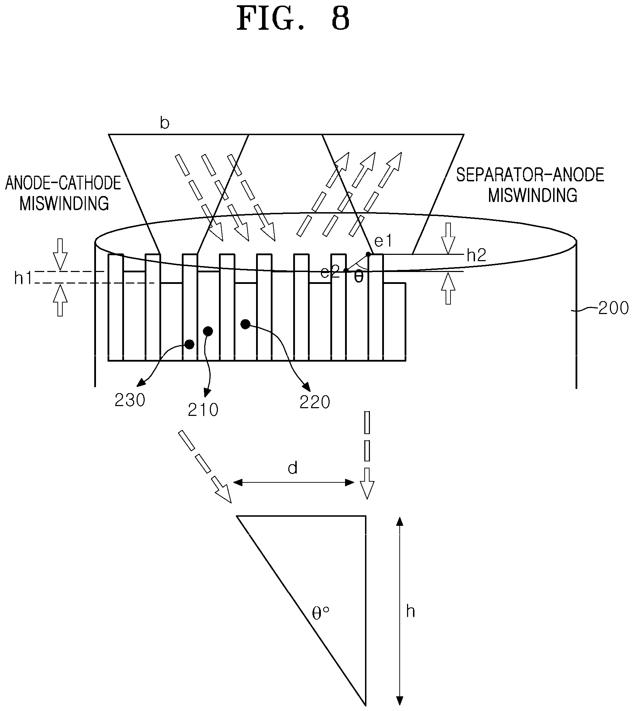

The processor 360 performs the miswinding inspection of the electrode assembly 200 based on the calculated phase difference. The miswinding inspection performed by the processor 360 based on the calculated phase difference will be described in more detail with reference to FIG. 7 and FIG. 8.

As such, the inspection apparatus 300 according to some embodiments can rapidly check miswinding of the electrode assembly 200 using a laser beam in real time without destruction of the electrode assembly 200.

FIG. 7 is a flowchart of the miswinding inspection according to some embodiments.

FIG. 8 is a diagram illustrating the miswinding inspection according to some embodiments.

Referring now to FIG. 7 and FIG. 8, at least one example of the miswinding inspection of the electrode assembly 200 illustrated in FIG. 3 to FIG. 6B will be described in more detail. Referring to FIG. 8, the electrode assembly 200 is formed by stacking an anode 210, a cathode 220 and a separator 230 such that the separator 230 is interposed between the anode 210 and the cathode 220.

Referring to FIG. 7, the inspection apparatus 300 according to some embodiments calculates a thickness based on the phase difference (step S301).

The processor 360 calculates the thickness of at least one of the anode 210, the cathode 220, and the separator 230 based on the phase difference. For example, in a structure in which the anode 210 is interposed between two separators 230, the two separators 230 may have a different phase than the anode 210 interposed therebetween. Alternatively, for example, in a structure in which the cathode 220 is interposed between the two separators 230, the two separators 230 may have a different phase than the cathode 220 interposed therebetween. Accordingly, the phase difference is, for example, a difference in phase between the anode 210 and the separator 230 or between the cathode 220 and the separator 230. Based on such a phase difference between at least two materials, the processor 360 can calculate the thickness of each material. That is, the processor 360 can calculate the thickness of at least one of the anode 210, the cathode 220, and the separator 230.

Referring to FIG. 7, the inspection apparatus 300 according to some embodiments calculates a miswinding distance based on the thickness (step S302).

Based on the calculated thickness, the processor 360 may calculate the miswinding distance between at least two of the anode 210, the cathode 220, and the separator 230. Here, the miswinding distance corresponds to a height difference between two materials. Here, a direction representing the height difference between the two materials is perpendicular to a direction representing the thickness of one material.

The miswinding distance represents, for example, a height difference h1 between the anode 210 and the cathode 220, a height difference h2 between the separator 230 and the anode 210, and/or a height difference between the separator 230 and the cathode 220.

The processor 360 calculates the miswinding distance based on the thickness. For example, the processor 360 may calculate the miswinding distance using trigonometry based on the calculated thickness. For a non-limiting example, the processor 360 may calculate the miswinding distance according to Equation 1:

$$\text{(Equation 1)}$$

$$\text{h} = \frac{d}{tan\theta}$$

Here, h denotes the miswinding distance between at least two of the anode 210, the cathode 220 and the separator 230; d denotes the thickness of at least one of the anode 210, the cathode 220, and the separator 230; and $\theta$ denotes an angle between a straight line of the shortest distance connecting a corner of one material to a corner of another material adjacent thereto and a longitudinal direction of the one material. Here, the corner of the one material is placed in a direction of the upper surface of the electrode assembly 200 to be close to the adjacent material. In addition, the corner of the adjacent material is placed in the direction of the upper surface of the electrode assembly 200 to be away from the one material. The straight line of the shortest distance is the shortest line among straight lines connecting the corner of the one material to the corner of the adjacent material.

For example, referring to FIG. 8, the separator 230 is placed adjacent the anode 210. A corner of the separator 230 is, for example, corner e1. A corner of the anode 210 is, for example, corner e2. The straight line of the shortest distance is a straight line connecting corner e1 to corner e2. d is the thickness of the adjacent material, that is, the thickness of the anode 210. $\theta$ is an angle between the straight line connecting corner e1 to corner e2 and the longitudinal direction of the separator 230. With these values, the processor 360 can calculate a miswinding value (height difference h2) between the separator 230 and the anode 210.

Referring to FIG. 7, the inspection apparatus 300 according to some embodiments performs the miswinding inspection based on the miswinding distance (step S303).

The processor 360 may compare the miswinding distance with a range of miswinding distances stored in a memory (for example, in the memory described in relation to FIG. 3). Upon determining that the calculated miswinding distance falls within the range of miswinding distances, the processor 360 determines that miswinding of the electrode assembly 200 is properly performed. Upon determining that the calculated miswinding distance does not fall within the range of miswinding distances, the processor 360 determines that winding of the electrode assembly 200 is not properly performed (that is, the electrode assembly 200 is miswinding).

As such, the inspection apparatus 300 according to some embodiments can rapidly check miswinding of the electrode assembly 200 using a laser beam in real time without destruction of the electrode assembly 200

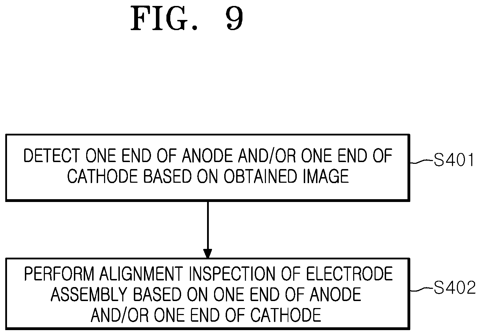

FIG. 9 is a flowchart of alignment inspection according to some embodiments.

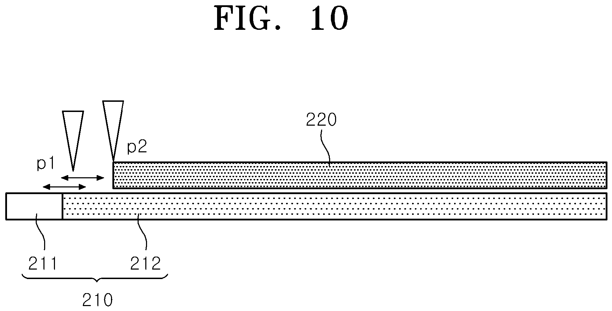

FIG. 10 is a diagram illustrating the alignment inspection according to some embodiments.

FIG. 9 and FIG 10 illustrate alignment inspection of the electrode assembly 200 as an example of checking the quality of the electrode assembly 200 illustrated in FIG. 3 to FIG. 4.

Referring to FIG. 9, the inspection apparatus 300 according to some embodiments detects one end of the anode and/or one end of the cathode based on the obtained image (step S401).

The obtained image includes, for example, an image of an upper surface of a jellyroll in a wound state, as described above. The obtained image may further include an image of a side surface of the jellyroll in an unwound state. Here, the image of the side surface of the jellyroll in the unwound state includes, for example, an image in which the jellyroll is unwound to expose one end of the anode 210 and/or one end of the cathode 220, as shown in FIG. 10.

One end of the anode 210 and/or one end of the cathode 220 includes a start point (leading end) of the anode 210 and/or the cathode 220. Here, the start point is an end of each layer located at a center of the jellyroll when the electrode assembly 200 is wound. Alternatively, the one end of the anode 210 and/or the cathode 220 includes a distal end (tip) of the anode 210 and/or the cathode 220. The distal end is an end of each layer located at an outer periphery of the jellyroll when the electrode assembly 200 is wound. In other words, the one end of the anode 210 and/or the cathode 220 may include an end of each layer included in the electrode assembly 200. For simplicity of description, FIG. 9 and FIG. 10 show "leading end" as an example of "one end".

The processor 360 may detect one end p1 of the anode and one end p2 of the cathode based on the obtained image. For example, the processor 360 checks a zone of each material using the laser beam and detects one end of each material based on the image of the upper surface of the jellyroll in the wound state. As an additional example, the processor 360 detects one end of each material from an image of the side surface of the jellyroll in the unwound state.

Here, the one end p1 of the anode indicates at least one point between an uncoated portion 211 and a coated portion 212. The uncoated portion 211 is an uncoated portion of a base material of the anode. The coated portion 212 is a coated portion on the base material of the anode, which is coated with, for example, an anode active material.

The one end p2 of the cathode 220 may be an end of one side of the cathode 220 in the longitudinal direction of the cathode 220.

For example, the one end p1 of the anode and the one end p2 of the cathode are located at a winding core of the electrode assembly 200 in an unwound state of the electrode assembly 200.

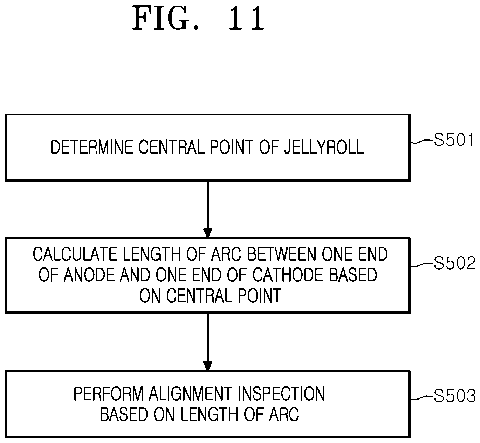

The processor 360 may calculate a distance between the one end p1 of the anode and the one end p2 of the cathode from the one end p1 of the anode and the one end p2 of the cathode detected thereby. This process will be described in more detail with reference to FIG. 11 to FIG. 12. However, it should be understood that this process is provided by way of example and the processor 360 may calculate the distances between the anode 210 and the cathode 220, between the anode 210 and the separator 230, and between the cathode 220 and the separator 230 in any of the ways described above.

Referring to FIG. 9, the inspection apparatus 300 according to some embodiments performs alignment inspection of the electrode assembly 200 based on one end of the anode and/or one end of the cathode (step S402).

The alignment inspection may be a process of checking a winding start point of each material in a process of winding a secondary battery. For example, in the alignment inspection, the winding start point of each of the anode 210, the cathode 220 and/or the separator 230 in the electrode assembly 200 is checked.

The processor 360 may check the winding start point of each of the materials included in the electrode assembly 200 through the one end p1 of the anode, the one end p2 of the cathode 220 and/or one end of the separator 230 (not shown). In addition, the processor 360 checks alignment between at least two materials in the electrode assembly 200 through the one end p1 of the anode, the one end p2 of the cathode 220 and/or the one end of the separator 230 (not shown).

As such, the inspection apparatus 300 according to some embodiments may check the winding start point of each of the materials and may automatically calculate alignment quality therebetween by detecting one end of the anode 210, one end of the cathode 220 and/or one end of the separator 230, followed by calculating the distance therebetween.

FIG. 11 is a flowchart illustrating the alignment inspection according to some embodiments.

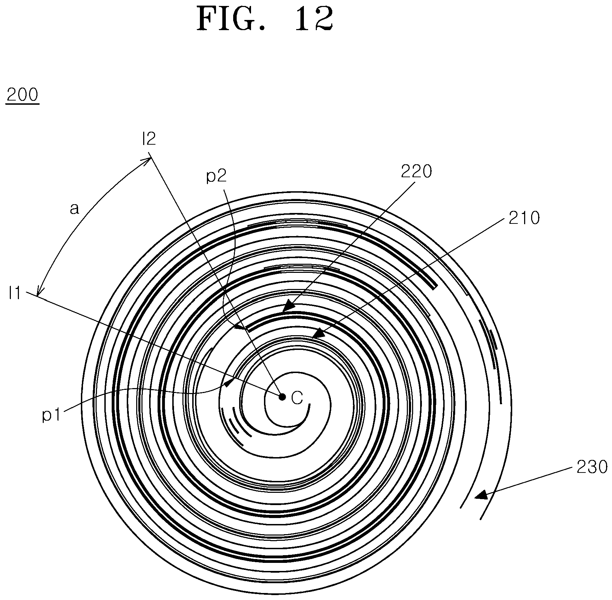

FIG. 12 is a diagram illustrating the alignment inspection according to some embodiments.

Referring to FIG. 11 and FIG. 12, an example of performing alignment inspection of the electrode assembly 200 shown in FIGS. 3, 4, 9 and 10 is described in more detail. FIG. 12 shows the upper surface of the electrode assembly 200.

Referring to FIG. 11, the inspection apparatus 300 according to some embodiments determines a central point of the jellyroll (step S501).

The processor 360 may determine the central point c of the electrode assembly 200 forming the jellyroll. Here, the central point c is placed at the winding core of the electrode assembly 200. For example, the central point c corresponds to a central axis about which the electrode assembly 200 is wound. The processor 360 may determine the central point c of the jellyroll based on the obtained image showing the upper surface of the wound electrode assembly 200.

Referring to FIG. 11, the inspection apparatus 300 according to some embodiments calculates a length of an arc corresponding to the distance between the one end of the anode and the one end of the cathode based on the central point (step S502).

The processor 360 may calculate the length of the arc, which corresponds to the distance between the materials in the electrode assembly, based on the central point c and one end of each material. For example, the processor 360 determines a first straight line 11 connecting the one end p1 of the anode to the central point c and a second straight line l2 connecting the one end p2 of the cathode to the central point c. The processor 360 may calculate an angle between the first straight line 11 and the second straight line l2. Based on the angle a between the first straight line 11 and the second straight line l2, the processor 360 calculates the length of the arc between the one end p1 of the anode and the one end p2 of the cathode. For example, the processor 360 calculates the length of the arc according to Equation 2:

$$s = t \cdot \frac{a}{360} \qquad \text{(Equation 2)}$$

Here, s is the length of the arc, which corresponds to the distance between the materials in the electrode assembly. For example, s is the length of the arc between the one end p1 of the anode and the one end p2 of the cathode. Here, t is the length of the entire arc of the jellyroll, which corresponds to the circumference of the jellyroll. In addition, a is an angle (e.g., in degrees °) between the materials in the electrode assembly. The angle a (in degrees °) has a value between 0° and 360°.

In this way, the processor 360 can calculate the arc length, which corresponds to the distance between the materials in the electrode assembly. For example, the processor 360 may calculate the length of the arc between the one end of the cathode and the one end of the anode.

Referring to FIG. 11, the inspection apparatus 300 according to some embodiments performs alignment inspection based on the length of the arc (step S503).

The processor 360 may perform the alignment inspection of the electrode assembly 200 by comparing at least one of one end of each material and the length of the arc between the materials with data stored in the memory.

As such, the inspection apparatus 300 according to some embodiments can check the winding start point of each material and can automatically check alignment between the materials by detecting one end of the anode 210, the cathode 220 and/or the separator 230 and calculating the distance therebetween.

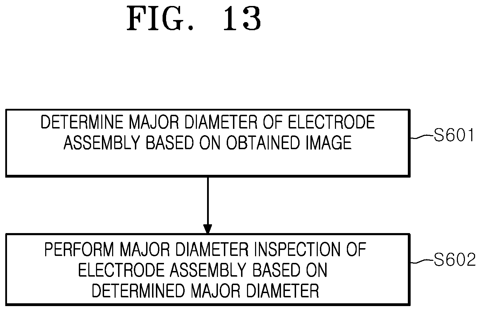

FIG. 13 is a flowchart illustrating major diameter inspection according to some embodiments.

FIG. 13 illustrates the major diameter inspection of the electrode assembly 200 as an example of checking the quality of the electrode assembly 200 illustrated in FIG. 3 and FIG. 4.

Referring to FIG. 13, the inspection apparatus 300 according to some embodiments determines a major diameter of the electrode assembly 200 based on the obtained image (step S601).

As described above, the obtained image may include an image of the upper surface of the electrode assembly 200.

The processor 360 may extract a certain pair of first points on the upper surface of the electrode assembly 200 (e.g., from the image of the upper surface). The processor 360 may calculate a first length corresponding to a distance between the first points. The processor 360 may calculate a second length corresponding to a distance between a certain pair of second points (extracted by the processor from the image). Here, one point of the pair of first points may overlap one point of the pair of second points. However, it should be noted that the pair of first points does not overlap the pair of second points. In other words, each of the pair of first points may be different from each of the pair of second points. The processor 360 may calculate the second length corresponding to the distance between the pair of second points. The processor 360 may compare the first length with the second length and determine a longer length among the first length and the second length to be a major diameter of the electrode assembly 200. For example, the processor 360 may determine the major diameter, which is the longest length of the electrode assembly 200, by repeating this process.

Referring to FIG. 13, the inspection apparatus 300 according to some embodiments performs the major diameter inspection (check) of the electrode assembly 200 based on the determined major diameter (step S602).

The major diameter inspection is a process of determining the major diameter, which is the maximum length at each angle, by connecting two points on the upper surface of the secondary battery 100 with a line.

The processor 360 may compare the determined major diameter with a range of major diameters stored in the memory to determine whether the electrode assembly 200 is properly manufactured.

Additionally or alternatively, the inspection apparatus 300 according to some embodiments may perform a volume inspection. The volume inspection is a process of photographing the upper surface of the secondary battery with a camera and measuring an area of the secondary battery based on the photographed image. For example, the processor 360 measures and/or checks the volume of the electrode assembly 200 based on the obtained image.

Additionally or alternatively, the inspection apparatus 300 according to some embodiments may perform one-end folded state inspection. The one-end folded state inspection is a process of checking a rolled state of each material and checking whether there is an overlapping portion between the materials. For example, the processor 360 checks a folded state of at least one of the anode, the cathode and the separator based on the obtained image showing the upper surface of the electrode assembly 200. However, the inspection apparatus 300 may also perform the one-end folded state inspection of the electrode assembly 200, with each material unfolded.

As such, the inspection apparatus 300 according to some embodiments can perform various quality inspections on the electrode assembly 200. Further, the inspection apparatus 300 can perform these inspections simultaneously or sequentially within a short period of time. Furthermore, the inspection apparatus 300 can perform these inspections without destruction of the electrode assembly 200.

Although the present technology has been described with reference to some embodiments and drawings illustrating aspects thereof, the present technology is not limited thereto. Various modifications and variations can be made by those skilled in the art within the technical spirit of the disclosure and the scope of the claims and equivalents thereto.

**Claims**

1. An apparatus for inspecting an electrode assembly (120, 200) including an anode (210), a cathode (220), and a separator (123, 230) interposed between the anode (210) and the cathode (220), the apparatus comprising:

   a laser irradiation unit (310) configured to irradiate the electrode assembly (120, 200) with a beam;
   an illumination unit (330) configured to irradiate the electrode assembly (120, 200) with light;
   an image acquisition unit (340) configured to obtain an image of the electrode assembly (120, 200) when irradiated with the beam and/or light; and
   a processor (360) configured to inspect the electrode assembly (120, 200) based on the obtained image.

2. The apparatus according to claim 1, wherein the processor (360) is configured to calculate a phase difference between at least two of the anode (210), the cathode (220) and the separator (123, 230) based on the obtained image and is configured to perform miswinding inspection of the electrode assembly (120, 200) based on the calculated phase difference.

3. The apparatus according to claim 2, wherein the processor (360) is configured to: calculate a thickness of at least one of the anode (210), the cathode (220) and the separator (123, 230) based on the calculated phase difference; calculate a miswinding distance between at least two of the anode (210), the cathode (220) and the separator (123, 230) based on the calculated thickness; and perform the miswinding inspection based on the calculated miswinding distance.

4. The apparatus according to claim 3, wherein the processor (360) is configured to calculate the miswinding distance using trigonometry based on the calculated thickness.

5. The apparatus according to claim 3 or 4, wherein the processor (360) is configured to: detect one end of the anode (210) and one end of the cathode (220) based on the obtained image and perform alignment inspection of the electrode assembly (120, 200) based on the one end of the anode (210) and the one end of the cathode (220).

6. The apparatus according to claim 5, wherein the electrode assembly (120, 200) is wound in one direction to form a jellyroll.

7. The apparatus according to claim 6, wherein the processor (360) is configured to: determine a central point of the jellyroll based on the obtained image, calculate a length of an arc between the one end of the anode (210) and the one end of the cathode (220) based on the central point, and perform the alignment inspection based on the arc length.

8. The apparatus according to claim 6 or 7, wherein the obtained image comprises at least one of an image of an upper surface (200t) of the jellyroll in a wound state and an image of a side surface of the jellyroll in an unwound state.

9. The apparatus according to claims 1 to 8, wherein the processor (360) is configured to: determine a major diameter of the electrode assembly (120, 200) based on the obtained image including an image of an upper surface (200t) of the electrode assembly (120, 200) and check the major diameter of the electrode assembly (120, 200) based on the determined major diameter.

10. The apparatus according to claim 9, wherein the processor (360) is configured to: extract a pair of first points from the image of the upper surface (200t) of the electrode assembly (120, 200), calculate a first length corresponding to a distance between the pair of first points, extract a pair of second points from the image of the upper surface (200t) of the electrode assembly (120, 200), calculate a second length corresponding to a distance between the pair of second points, and determine a longer length among the first length and the second length to be the major diameter of the electrode assembly (120, 200) by comparing the first length with the second length.

11. The apparatus according to claims 1 to 10, wherein the processor (360) is configured to check a volume of the electrode assembly (120, 200) based on the obtained image.

**12.** The apparatus according to claims 1 to 11, wherein the processor (360) is configured to check a folded state of at least one of the anode (210), the cathode (220) and the separator (123, 230) based on the obtained image including an image of an upper surface (200t) of the electrode assembly (120, 200).

**13.** The apparatus according to claims 1 to 12, wherein the image acquisition unit (340) comprises a vision camera.

**14.** The apparatus according to claims 1 to 13, wherein the processor (360) further comprises:

a lens unit (350) allowing the image acquisition unit (340) to obtain the image of the electrode assembly (120, 200) when irradiated with the beam and/or light; and
at least one reflector (320) reflecting the beam received from the laser irradiation unit (310) towards the electrode assembly (120, 200).

**15.** A method for inspecting an electrode assembly (120, 200), comprising:
performing inspection of the electrode assembly (120, 200) with regard to at least one of miswinding, alignment, major diameter, volume, and folded state of the electrode assembly (120, 200) through an apparatus for inspecting an electrode assembly (120, 200) including an anode (210), a cathode (220), and a separator (123, 230) interposed between the anode (210) and the cathode (220), the apparatus comprising:

a laser irradiation unit (310) configured to irradiate the electrode assembly (120, 200) with a beam;
an illumination unit (330) configured to irradiate the electrode assembly (120, 200) with light;
an image acquisition unit (340) configured to obtain an image of the electrode assembly (120, 200) irradiated with the beam and/or light; and
a processor (360) configured to inspect the electrode assembly (120, 200) based on the obtained image.

# FIG. 1

# FIG. 2

# FIG. 3

# FIG. 4

IRRADIATE ELECTRODE ASSEMBLY WITH
BEAM AND/OR LIGHT — S101

OBTAIN IMAGE OF ELECTRODE ASSEMBLY
IRRADIATED WITH BEAM AND/OR LIGHT — S102

INSPECT ELECTRODE ASSEMBLY
BASED ON OBTAINED IMAGE — S103

# FIG. 5

CALCULATE PHASE DIFFERENCE BETWEEN TWO OF
ANODE, CATHODE AND SEPARATOR BASED ON
OBTAINED IMAGE
— S201

PERFORM MISWINDING INSPECTION OF
ELECTRODE ASSEMBLY BASED ON CALCULATED
PHASE DIFFERENCE
— S202

# FIG. 6A

# FIG. 6B

200

# FIG. 7

```
┌──────────────────────────────────────┐
│     CALCULATE THICKNESS BASED ON      │──S301
│           PHASE DIFFERENCE            │
└──────────────────────────────────────┘
                    │
                    ▼
┌──────────────────────────────────────┐
│      CALCULATE MISWINDING DISTANCE    │──S302
│           BASED ON THICKNESS          │
└──────────────────────────────────────┘
                    │
                    ▼
┌──────────────────────────────────────┐
│     PERFORM MISWINDING INSPECTION     │──S303
│       BASED ON MISWINDING DISTANCE    │
└──────────────────────────────────────┘
```

# FIG. 8

ANODE-CATHODE
MISWINDING

SEPARATOR-ANODE
MISWINDING

b

e1

e2 θ

h2

h1

200

230    210    220

d

θ°    h

# FIG. 9

```
┌─────────────────────────────────────────────────┐
│ DETECT ONE END OF ANODE AND/OR ONE END OF        │──S401
│ CATHODE BASED ON OBTAINED IMAGE                  │
└─────────────────────────────────────────────────┘
                         │
                         ▼
┌─────────────────────────────────────────────────┐
│ PERFORM ALIGNMENT INSPECTION OF ELECTRODE        │──S402
│ ASSEMBLY BASED ON ONE END OF ANODE               │
│ AND/OR ONE END OF CATHODE                        │
└─────────────────────────────────────────────────┘
```

# FIG. 10

# FIG. 11

```
┌─────────────────────────────────────────────┐
│   DETERMINE CENTRAL POINT OF JELLYROLL       │──S501
└─────────────────────────────────────────────┘
                       │
                       ▼
┌─────────────────────────────────────────────┐
│  CALCULATE LENGTH OF ARC BETWEEN ONE END     │
│  OF ANODE AND ONE END OF CATHODE BASED       │──S502
│            ON CENTRAL POINT                  │
└─────────────────────────────────────────────┘
                       │
                       ▼
┌─────────────────────────────────────────────┐
│        PERFORM ALIGNMENT INSPECTION          │
│          BASED ON LENGTH OF ARC              │──S503
└─────────────────────────────────────────────┘
```

# FIG. 12

200

l2

a

p2

220

210

l1

p1

C

230

# FIG. 13

DETERMINE MAJOR DIAMETER OF ELECTRODE ASSEMBLY BASED ON OBTAINED IMAGE ~S601

PERFORM MAJOR DIAMETER INSPECTION OF ELECTRODE ASSEMBLY BASED ON DETERMINED MAJOR DIAMETER ~S602

## EUROPEAN SEARCH REPORT

**Application Number**

EP 25 15 7677

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/314124 A1 (WANG XUMING [CN] ET AL) 5 October 2023 (2023-10-05) * paragraph [0053] - paragraph [0060] * * figures 1-3 * | 1-15 | INV. G01B11/25 G01N21/88 G01N21/95 H01M10/00 |
| X | CN 219 776 639 U (HYMSON LASER TECH GROUP CO LTD) 29 September 2023 (2023-09-29) * the whole document * | 1-15 | |
| X | US 2005/206883 A1 (GAO WEN L [US]) 22 September 2005 (2005-09-22) * paragraph [0002] * * paragraph [0021] - paragraph [0035] * * figure 3 * | 1-15 | |
| X | JP 2018 085197 A (PRIMEARTH EV ENERGY CO LTD) 31 May 2018 (2018-05-31) * paragraph [0026] - paragraph [0030] * * figure 1 * | 1-15 | |
| X | KR 2022 0031440 A (HYUNDAI MOTOR CO LTD [KR]; KIA CORP [KR]) 11 March 2022 (2022-03-11) * the whole document * | 1-15 | **TECHNICAL FIELDS SEARCHED (IPC)** G01B H01M G01N |

The present search report has been drawn up for all claims

| Place of search | Date of completion of the search | Examiner |
|---|---|---|
| The Hague | 2 July 2025 | Liefrink, Feike |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 7677

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | Publication date | Patent family member(s) | Publication date |
|---|---|---|---|
| US 2023314124 A1 | 05-10-2023 | CN 116348734 A | 27-06-2023 |
| | | EP 4230953 A1 | 23-08-2023 |
| | | JP 7407339 B2 | 28-12-2023 |
| | | JP 2023543525 A | 16-10-2023 |
| | | KR 20230070520 A | 23-05-2023 |
| | | US 2023314124 A1 | 05-10-2023 |
| | | WO 2023050064 A1 | 06-04-2023 |
| CN 219776639 U | 29-09-2023 | NONE | |
| US 2005206883 A1 | 22-09-2005 | NONE | |
| JP 2018085197 A | 31-05-2018 | CN 108088844 A | 29-05-2018 |
| | | JP 6657056 B2 | 04-03-2020 |
| | | JP 2018085197 A | 31-05-2018 |
| KR 20220031440 A | 11-03-2022 | NONE | |

EPO FORM P0459

For more details about this annex : see Official Journal of the European Patent Office, No. 12/82